# EUROPÄISCHE PATENTSCHRIFT

(11) **EP 3 047 340 B1**
(45) Veröffentlichungstag und Bekanntmachung des Hinweises auf die Patenterteilung: **10.10.2018**
(21) Anmeldenummer: 14755092.5
(22) Anmeldetag: 25.08.2014
(51) Int. Cl.: G05B 19/042, D06F 33/02, G05B 15/02, D06F 39/00

(54) **SYSTEM, NACHRÜSTMODUL UND VERFAHREN ZUM ÜBERWACHEN EINES AKTUELLEN BETRIEBSZUSTANDS EINES PROGRAMMGESTEUERTEN HAUSHALTSGERÄTS**
SYSTEM, RETROFIT MODULE AND METHOD FOR MONITORING A CURRENT OPERATIONAL STATE OF A PROGRAM-CONTROLLED DOMESTIC APPLIANCE
SYSTÈME, MODULE D'ADAPTATION ET PROCÉDÉ DE SURVEILLANCE D'UN ÉTAT DE FONCTIONNEMENT EN COURS D'UN APPAREIL MÉNAGER COMMANDÉ PAR PROGRAMME

(30) Priorität: 16.09.2013 DE 102013218468
(43) Veröffentlichungstag der Anmeldung: 27.07.2016
(73) Patentinhaber: BSH Hausgeräte GmbH, 81739 München (DE)
(72) Erfinder: PIETSCH, Ingo, 81829 München (DE); WINDE, Mirco, 81667 München (DE); GARBE, Thomas, 85521 Ottobrunn (DE)
(86) Internationale Anmeldenummer: PCT/EP2014/067984
(87) Internationale Veröffentlichungsnummer: WO 2015/036229

(56) Entgegenhaltungen:
- EP-A2- 1 186 695
- DE-A1- 10 214 794
- DE-A1-102004 021 019
- DE-A1-102010 015 643
- DE-A1-102010 063 134
- DE-A1-102011 076 181
- DE-A1-102011 077 572
- FARID ZIDAT ET AL: "Non Invasive Sensors for Monitoring the Efficiency of AC Electrical Rotating Machines", SENSORS, Bd. 10, Nr. 8, 23. August 2010 (2010-08-23), Seiten 7874-7895, XP055151138, DOI: 10.3390/s100807874

## Beschreibung

Die Erfindung betrifft ein System zum Überwachen eines aktuellen Betriebszustands eines programmgesteuerten Haushaltsgeräts beim Durchführen eines Betriebsprozesses durch das Haushaltsgerät, umfassend ein Nachrüstmodul und ein von dem Nachrüstmodul und dem Haushaltsgerät separates Kommunikationsgerät, wobei das Nachrüstmodul eine Befestigungseinrichtung zum lösbaren Befestigen des Nachrüstmoduls an einer Außenseite eines Gerätegehäuses des Haushaltsgeräts, eine Datenaustauscheinheit zur drahtlosen Kommunikation mit dem Kommunikationsgerät und eine Sensoreinrichtung umfasst, welche zum Erfassen zumindest eines durch das Gerätegehäuse nach außen durchdringenden Emissionssignals einer den Betriebsprozess des Haushaltsgeräts durchführenden Komponente des Haushaltsgeräts ausgebildet ist. Das System ist dazu ausgelegt, anhand von Messwerten des Emissionssignals den aktuellen Betriebszustand des Haushaltsgeräts zu bestimmen und über das Kommunikationsgerät auszugeben. Die Erfindung betrifft außerdem ein Nachrüstmodul für ein solches System sowie ein Verfahren zum Überwachen eines aktuellen Betriebszustands eines programmgesteuerten Haushaltsgeräts.

Es ist bereits Stand der Technik, ein Haushaltsgerät an ein drahtloses lokales Netzwerk, insbesondere ein WLAN-Netzwerk, kommunikationstechnisch anzukoppeln. Über ein derartiges Netzwerk kann das Haushaltsgerät beispielsweise mit anderen Geräten kommunizieren, die ebenfalls an das Netzwerk angeschlossen sind. Andererseits ist auch eine Kommunikation zwischen dem Haushaltsgerät und einem Internetserver möglich, welche über einen Zugangspunkt (access point) bzw. über einen WLAN-Router durchgeführt werden kann. Beispielsweise können im Rahmen dieser Kommunikation Zustandsdaten von dem Haushaltsgerät an den Internetserver übermittelt werden, welche dann von dem Internetserver an ein internetfähiges Kommunikationsendgerät übermittelt werden können. Beispielsweise kann der Benutzer des Haushaltsgeräts mit seinem Smartphone auf die Zustandsdaten zugreifen, welche auf dem Internetserver abgelegt sind. Bei den Zustandsdaten kann es sich beispielsweise um Informationen bezüglich eines Betriebsprozesses des Haushaltsgeräts handeln, wie insbesondere über eine zum Abschließen des Betriebsprozesses benötigte Restzeit oder Informationen darüber, dass der Betriebsprozess - beispielsweise ein Waschgang - bereits abgeschlossen wurde. Es kann im Rahmen dieser Kommunikation gegebenenfalls auch eine Bedienung des Haushaltsgeräts unter Verwendung des tragbaren Kommunikationsendgeräts - beispielsweise des genannten Smartphones - ermöglicht werden.

Zum Stand der Technik gehört außerdem die Bereitstellung einer drahtlosen Kommunikationsverbindung direkt zwischen dem Haushaltsgerät und einem tragbaren Kommunikationsgerät unter Umgehung des Heimnetzwerks. Diese direkte Kommunikation kann beispielsweise über eine NFC-Verbindung (Near Field Communication) erfolgen. Auch hier können einerseits Zustandsdaten des Haushaltsgeräts an das tragbare Kommunikationsendgerät übermittelt werden; andererseits können auch Steuerbefehle von dem tragbaren Kommunikationsendgerät an das Haushaltsgerät übertragen werden. Ein solches Verfahren zur Steuerung eines Fernsehgeräts oder einer Klimaanlage ist beispielsweise aus dem Dokument US 2012/0236820 A1 bekannt. Hier wird zunächst eine Kommunikationsverbindung zwischen einem Mobiltelefon und dem Fernsehgerät unter Verwendung des NFC-Kommunikationsstandards hergestellt. Nach Herstellung dieser Kommunikationsverbindung erfolgt dann eine weitere Kommunikation über ein sekundäres Netzwerk, wie beispielsweise ein WLAN-Netzwerk.

Die Kommunikation zwischen dem Haushaltsgerät und einem externen Gerät, wie beispielsweise einem Smartphone oder einem Tablet-PC oder aber einem Internet-Server, setzt also insgesamt voraus, dass das Haushaltsgerät selbst über eine entsprechende Kommunikationseinrichtung verfügt, welche zum Durchführen dieser Kommunikation dient. Eine solche Kommunikation ist daher bei Haushaltsgeräten ohne eine derartige Kommunikationseinrichtung nicht möglich. Bei Haushaltsgeräten, welche über keine Kommunikationseinrichtung verfügen, muss sich der Benutzer in üblicher Weise an dem Haushaltsgerät selbst über den aktuellen Betriebszustand des Haushaltsgeräts informieren, wie etwa über die Restzeit eines Waschprozesses.

Eine gewisse Abhilfe schafft hier ein Nachrüstmodul, wie es in dem Dokument DE 10 2005 019 377 A1 beschrieben ist. Für eine Fernüberwachung des Betriebszustands eines Haushaltsgeräts wird hier ein Nachrüstmodul vorgeschlagen, welches über Sensoren verfügt, die beispielsweise eine Vibration, Betriebsgeräusche und optisch wahrnehmbare Bewegungen des Haushaltsgeräts erfassen. Abhängig von diesen Messwerten wird dann ein Ist-Betriebsprofil des Haushaltsgeräts ermittelt und mit einem Referenz-Betriebsprofil verglichen. Das Nachrüstmodul kann über eine entsprechende Kommunikationsschnittstelle verfügen, über welche der aktuelle Betriebszustand des Haushaltsgeräts an ein externes Gerät übermittelt wird.

Aus der DE 10 2004 021 019 A1 ist ein Haushaltsgerät bekannt, bei dem die notwendigen Speicher-, Steuer- und Überwachungsfunktionen sowie die Vorrichtungen zur Ausgabe von Informationen und zur Nutzerkommunikation in einer Baugruppe integriert sind, die von dem Haushaltsgerät trennbar ist.

Aus dem Dokument DE 10 2011 076 181 A1 ist eine Vorrichtung mit einer Sensoreinheit und einer Datenübertragungseinheit bekannt, welche speziell für einen Kochtopf konzipiert ist. Die Sensoreinheit wird an einer Innenseite der Wand des Kochtopfs befestigt, während die Datenübertragungseinheit an der Außenseite der Wand und somit gegenüber der Sensoreinheit befestigt wird. Die Sensoreinheit misst die Temperatur innerhalb des Kochtopfs und übermittelt die Temperaturmesswerte über ein Magnetfeld an die Datenübertragungseinheit.

Eine besondere Herausforderung besteht darin, die von dem Haushaltsgerät selbst ausgegebenen Emissionssignale von anderen Signalen zu unterscheiden, die nicht durch das Haushaltsgerät selbst, sondern in der Umgebung des Haushaltsgeräts durch andere Ereignisse verursacht werden. Dies gilt insbesondere bei der Erfassung der Vibrationen bzw. des Geräusches. So kann beispielsweise bereits ein Trittschall einer am Haushaltsgerät vorbeigehenden Person dazu führen, dass dieses Signal als Emissionssignal des Haushaltsgeräts interpretiert wird. Dies führt zu Fehlern bei der Ermittlung des aktuellen Betriebszustands des Haushaltsgeräts. Eine besondere Auswirkung hat dies auf die Detektion des Programmabschlusses eines Wachgangs bei einer Waschmaschine. Es kann nämlich vorkommen, dass selbst nach dem Programmende Vibrationssignale von Störquellen erfasst werden, welche fälschlicherweise als weiterer Betrieb des Haushaltsgeräts ausgewertet werden. Das Programmende kann in solchen Situationen nicht genau erfasst werden.

Es ist Aufgabe der Erfindung, einen Weg aufzuzeigen, wie bei einem System der eingangs genannten Gattung die Überwachung des aktuellen Betriebszustands des Haushaltsgeräts besonders plausibel durchgeführt werden kann.

Diese Aufgabe wird erfindungsgemäß durch ein Nachrüstmodul, wie auch durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.
Ein erfindungsgemäßes System ist zum Überwachen eines aktuellen Betriebszustands eines programmgesteuerten Haushaltsgeräts beim Durchführen eines Betriebsprozesses durch das Haushaltsgerät ausgebildet. Das System umfasst ein Nachrüstmodul und ein von dem Nachrüstmodul und dem Haushaltsgerät separates Kommunikationsgerät. Das Nachrüstmodul umfasst eine Befestigungseinrichtung, eine Sensoreinrichtung sowie eine Datenaustauscheinheit. Die Befestigungseinrichtung ist zum lösbaren Befestigen des Nachrüstmoduls an einer Außenseite eines Gerätegehäuses des Haushaltsgeräts ausgebildet. Die Datenaustauscheinheit dient zur drahtlosen Kommunikation mit dem Kommunikationsgerät, nämlich insbesondere direkt und/oder über einen Internetserver. Die Sensoreinrichtung ist zum Erfassen zumindest eines durch das Gerätegehäuse hindurch nach außen durchdringenden Emissionssignals ausgebildet, welches durch eine den Betriebsprozess des Haushaltsgeräts durchführende Komponente des Haushaltsgeräts erzeugt wird. Das System bestimmt den aktuellen Betriebszustand des Haushaltsgeräts anhand von erfassten Messwerten des Emissionssignals und gibt den aktuellen Betriebszustand über das Kommunikationsgerät aus. Erfindungsgemäß ist vorgesehen, dass die Sensoreinrichtung des Nachrüstmoduls einen Magnetfeldsensor umfasst, der zum Erfassen eines durch einen Antriebsmotor als Komponente des Haushaltsgeräts erzeugten Magnetfelds als Emissionssignal ausgebildet ist.
Die Erfindung macht sich die Tatsache zunutze, dass die heutigen Haushaltsgeräte - insbesondere die Haushaltgroßgeräte, wie beispielsweise Geräte zur Pflege von Wäschestücken - üblicherweise über einen elektrischen Antriebsmotor in Gestalt einer Synchronmaschine bzw. eines bürstenlosen Gleichstrommotors (BLDC) verfügen. Der Stator eines derartigen Antriebsmotors besitzt Elektromagnete, welche im Betrieb des Haushaltsgeräts magnetisches Drehfeld erzeugen, welches auch durch das Gerätegehäuse hindurch detektiert werden kann. Die Erfassung des Magnetfelds ermöglicht eine besonders plausible und zuverlässige Bestimmung des aktuellen Betriebszustands des Haushaltsgeräts. Es ist nämlich sehr unwahrscheinlich, dass in der Umgebung des Haushaltsgeräts auch weitere Magnetfeldquellen vorhanden sind, welche die Erfassung des Magnetfelds des Antriebsmotors beeinträchtigen könnten. Wird durch den Magnetsensor ein externes Magnetfeld erfasst, so kann somit mit sehr hoher Wahrscheinlichkeit festgestellt werden, dass es sich bei dem Magnetfeld um ein Emissionssignal des Haushaltsgeräts selbst handelt. Es können somit Fehler bei der Bestimmung des Betriebszustands ausgeschlossen werden. Die Erfassung des Magnetfelds hat außerdem den Vorteil, dass es Rückschlüsse auf den aktuellen Betriebszustand des Haushaltsgeräts ohne viel Aufwand ermöglicht. So kann zunächst überhaupt erfasst bzw. detektiert werden, ob sich der Antriebsmotor dreht oder nicht. Auf diese Art und Weise kann beispielsweise das Ende des Betriebsprozesses des Haushaltsgeräts detektiert und über das Kommunikationsgerät ausgegeben werden. Es sind aber auch Rückschlüsse auf weitere Betriebszustände möglich. So lässt sich anhand des Magnetfelds gegebenenfalls sogar die Drehzahl des Antriebsmotors zuverlässig bestimmen, was wiederum auf den Programmfortschritt schließen lässt. Das von dem Antriebsmotor erzeugte Magnetfeld ist nämlich ein Drehfeld mit einer vorgegebenen Drehfrequenz, welche durch das System ausgewertet und hinsichtlich des Programmfortschritts und/oder im Hinblick auf mögliche Betriebsfehler des Haushaltsgeräts ausgewertet werden kann.

Das Haushaltsgerät ist also ein programmgesteuertes Haushaltsgerät. Dies kann insbesondere bedeuten, dass in dem Haushaltsgerät eine Vielzahl von Betriebsprogrammen abgelegt sind, welche durch den Benutzer ausgewählt werden können. Der Betriebsprozess wird dann gemäß dem ausgewählten Betriebsprogramm durchgeführt. Das Haushaltsgerät ist vorzugsweise ein Haushaltsgroßgerät, wie insbesondere ein Gerät zur Pflege von Wäschestücken oder eine Geschirrspülmaschine. Ein Gerät zur Pflege von Wäschestücken kann beispielsweise eine Waschmaschine, ein Waschtrockner oder ein Wäschetrockner sein.

Das Nachrüstmodul kann beispielsweise ein Modulgehäuse aufweisen, in welchem die Komponenten Sensoreinrichtung und Datenaustauscheinheit untergebracht sind. Es handelt sich dabei also um ein geschlossenes Modul, welches an der Außenseite des Gerätegehäuses befestigt werden kann und insbesondere keine Datenkommunikation mit dem Haushaltsgerät durchführt. Das Nachrüstmodul ist also vollständig unabhängig von dem Haushaltsgerät und vollständig außerhalb des Haushaltsgeräts anzuordnen, sodass an dem Haushaltsgerät selbst nichts geändert zu werden braucht. Das System kommt bevorzugt auch ohne eine Erfassung des elektrischen Stroms des Haushaltsgeräts aus. Das Nachrüstmodul kann für die Energieversorgung einen internen Energiespeicher beinhalten, wie beispielsweise einen wiederaufladbaren Akkumulator. Es kann aber auch ein batteriebetriebenes Nachrüstmodul bereitgestellt werden. Ergänzend oder alternativ kann auch ein Stromanschluss bereitgestellt werden, über welchen das Nachrüstmodul an eine herkömmliche Steckdose angeschlossen werden kann.

Es erweist sich als besonders vorteilhaft, wenn zusätzlich zu dem Magnetfeldsensor die Sensoreinrichtung des Nachrüstmoduls zumindest einen weiteren Sensor umfasst, der zum Erfassen eines von dem Magnetfeld verschiedenen Emissionssignals einer Komponente des Haushaltsgeräts ausgebildet ist. Der Betriebszustand des Haushaltsgeräts wird dann auch unter Berücksichtigung von durch den zumindest einen weiteren Sensor erfassten Messwerten bestimmt. Die Erfassung zumindest eines weiteren Emissionssignals des Haushaltsgeräts hat zum einen den Vorteil einer weiteren Plausibilisierung; zum anderen ermöglicht die Erfassung von mehreren Emissionssignalen auch die präzise Bestimmung von weiteren Betriebszuständen des Haushaltsgeräts.

Besonders bevorzugt kann eine Kombination aus dem Magnetfeldsensor und einem Beschleunigungssensor eingesetzt werden, welcher zum Erfassen einer Beschleunigung als Emissionssignal ausgebildet ist. Das System kann den Betriebszustand des Haushaltsgeräts dann auch unter Berücksichtigung der Beschleunigung bestimmen. Das Beschleunigungssignal ermöglicht besonders genaue Rückschlüsse auf eine Vielzahl von Betriebszuständen des Haushaltsgeräts. So kann anhand eines solchen Emissionssignals auch ein Betriebsfehler des Haushaltsgeräts und/oder der aktuelle Programmfortschritt detektiert werden.

Ergänzend oder alternativ kann die Sensoreinrichtung des Nachrüstmoduls auch einen Schallsensor zum Erfassen eines Körperschalls und/oder eines Luftschalls als Emissionssignal umfassen. Das System kann dann den Betriebszustand des Haushaltsgeräts auch unter Berücksichtigung des Körperschalls und/oder des Luftschalls bestimmen. Als Schallsensor kann beispielsweise ein Mikrofon eingesetzt werden. Auch die Erfassung des Körperschalls und/oder des Luftschalls bietet zusätzliche Möglichkeiten der weiteren Plausibilisierung und/oder der Bestimmung von weiteren Betriebszuständen des Haushaltsgeräts. Insbesondere der Einsatz eines Mikrofons hat den Vorteil, dass akustische Betriebstöne des Haushaltsgeräts detektiert werden können, welche über einen Lautsprecher des Haushaltsgeräts ausgegeben werden. Solche Betriebstöne werden üblicherweise nach dem Ende des Betriebsprozesses ausgegeben und informieren den Benutzer über den ordnungsgemäßen Abschluss des Betriebsprozesses. Solche Töne können nun durch das Nachrüstmodul erfasst und beispielsweise dahingehend ausgewertet werden, dass der Betriebsprozess beendet wurde. Diese Information kann dann über das Kommunikationsgerät des Systems ausgegeben werden.

Weiterhin ergänzend oder alternativ kann die Sensoreinrichtung des Nachrüstmoduls auch einen Temperatursensor umfassen, der zum Erfassen einer Temperatur ausgebildet ist, welcher die Außenseite des Gerätegehäuses ausgesetzt ist. Der Temperatursensor kann dabei entweder die Umgebungstemperatur in unmittelbarer Nähe der Außenwand des Haushaltsgeräts oder aber eine Temperatur direkt an der Außenseite der Außenwand des Gerätegehäuses erfassen. Das System kann dann den Betriebszustand des Haushaltsgeräts auch unter Berücksichtigung der Temperatur bestimmen. Die Erfassung der aktuellen Temperatur erweist sich insbesondere bei der Detektion von Betriebsfehlern des Haushaltsgeräts als vorteilhaft, bei denen die Temperatur des Haushaltsgeräts beispielsweise bestimmte Grenzwerte überschreitet. Werden solche Betriebsfehler detektiert, kann dies über das Kommunikationsgerät signalisiert werden. Außerdem kann durch Erfassung der aktuellen Temperatur auch beispielsweise zwischen einem Waschgang und einem Schleuderbetrieb eines Waschprozesses einer Waschmaschine unterschieden werden. Dies kann beispielsweise die Ermittlung des aktuellen Programmfortschritts unterstützen.

Hinsichtlich der Auswertung der Messwerte der Sensoreinrichtung und der Bestimmung des aktuellen Betriebszustands des Haushaltsgeräts können folgende Ausführungsformen vorgesehen sein:
Zum einen kann die Auswertung der Messwerte in dem Nachrüstmodul selbst erfolgen. Anhand der Messwerte des zumindest einen Emissionssignals kann das Nachrüstmodul also selbst den Betriebszustand des Haushaltsgeräts bestimmen und an das Kommunikationsgerät übertragen. Dazu kann in dem Nachrüstmodul eine entsprechende Auswerteeinrichtung in Form eines digitalen Signalprozessors eingesetzt werden. Diese Ausführungsform hat den Vorteil, dass der ermittelte Betriebszustand des Haushaltgeräts auch direkt beispielsweise an ein Smartphone als Kommunikationsgerät unter Verwendung eines lokalen Netzwerks übermittelt werden kann, ohne dass in dem Kommunikationsgerät selbst eine zusätzliche Datenverarbeitung vorgenommen werden muss.

Zum anderen kann ergänzend oder alternativ jedoch auch vorgesehen sein, dass die Messwerte des zumindest einen Emissionssignals über die Datenaustauscheinheit des Nachrüstmoduls an das Kommunikationsgerät und/oder einen Internet-Server übertragen werden. Das Kommunikationsgerät (zum Beispiel Smartphone oder Tablet-PC oder ein herkömmlicher PC) und/oder der Internet-Server kann dann anhand der empfangenen Messwerte den aktuellen Betriebszustand des Haushaltsgeräts bestimmen. Diese Ausführungsform wiederum hat den Vorteil, dass hier auch aufwändigere Signalverarbeitungsalgorithmen implementiert werden können, welche mehr Rechenleistung erfordern. Außerdem bietet diese Ausführungsform auch Update-Möglichkeiten.

Es erweist sich als besonders vorteilhaft, wenn die Sensoreinrichtung des Nachrüstmoduls zusätzlich zu dem Magnetfeldsensor zumindest einen weiteren Sensor umfasst und das System, insbesondere das Nachrüstmodul selbst, eine Plausibilisierungseinrichtung umfasst, welche anhand eines Vergleichs des Magnetfelds mit dem Emissionssignal des zumindest einen weiteren Sensors überprüft, ob diese Emissionssignale von dem Haushaltsgerät stammen. Diese Emissionssignale können dann ausschließlich nach einer erfolgreichen Zuordnung zu dem Haushaltsgerät für die weitere Bestimmung des aktuellen Betriebszustands verwendet werden. Durch den Vergleich zweier verschiedener Emissionssignale lässt sich also bestimmen, ob diese Emissionssignale tatsächlich von dem Haushaltsgerät selbst ausgegeben wurden oder aber Signale externer Störquellen sind. Die Wahrscheinlichkeit eines Fehlers bei der Bestimmung des aktuellen Betriebszustands des Haushaltsgeräts kann somit auf ein Minimum reduziert werden.

Es ist auch möglich, die erfassten Emissionssignale zu filtern. Diese Filterung kann auch in dem Nachrüstmodul selbst implementiert werden. Somit lassen sich beispielsweise Emissionssignale anderer Störquellen herausfiltern.

Das Kommunikationsgerät ist bevorzugt ein tragbares Endgerät, welches mit dem Nachrüstmodul direkt und/oder über einen Internet-Server kommuniziert. Das tragbare Endgerät kann zum Beispiel ein Smartphone oder Tablet-PC sein. Diese Ausführungsform macht sich die Tatsache zunutze, dass heutzutage nahezu jeder über ein Mobiltelefon mit einem Display verfügt, sodass sich der Einsatz von zusätzlichen Geräten mit den damit verbundenen Nachteilen erübrigt. Unter einem mobilen Endgerät wird vorliegend ein tragbares Kommunikationsendgerät verstanden, welches zur drahtlosen Kommunikation gemäß einem vorbestimmten Kommunikationsstandard ausgebildet ist und auf welchem neue Anwendungen bzw. Applikationen installiert und dann ausgeführt werden können.

Das System - sei es das Nachrüstmodul selbst, sei es der Internet-Server, sei es das Kommunikationsgerät - kann den aktuellen Betriebszustand des Haushaltsgeräts vorzugsweise anhand eines Vergleichs der Messwerte des Magnetfelds und/oder zumindest eines von dem Magnetfeld verschiedenen Emissionssignals mit abgelegten Referenzwerten bestimmen. Bei den Referenzwerten kann es sich beispielsweise um zeitliche Referenzverläufe des jeweiligen Emissionssignals handeln, welche dann mit dem zeitlichen Verlauf des tatsächlich erfassten Emissionssignals verglichen werden. Anhand eines solchen Vergleichs lässt sich beispielsweise das aktuell ausgewählte Betriebsprogramm des Haushaltgeräts bestimmen, wie auch der Programmfortschritt.

In einer Ausführungsform ist vorgesehen, dass das System anhand eines Vergleichs der Messwerte des Magnetfelds und/oder zumindest eines von dem Magnetfeld verschiedenen Emissionssignals mit abgelegten Referenzwerten einen Betriebsfehler des Haushaltsgeräts als Betriebszustand detektieren und über das Kommunikationsgerät signalisieren kann. Der Benutzer kann somit über die Betriebsfehler des Haushaltsgeräts informiert werden und kann somit gegebenenfalls entsprechende Sicherheitsmaßnahmen treffen.

Hinsichtlich des Betriebszustands können folgende Ausführungsformen vorgesehen sein: Anhand der Messwerte des Magnetfelds und/oder zumindest eines von dem Magnetfeld verschiedenen Emissionssignals kann ein aktuell ausgewähltes Betriebsprogramm des Haushaltsgeräts als Betriebszustand ermittelt werden. Ergänzend oder alternativ kann auch ein Abschluss des Betriebsprozesses als Betriebszustand detektiert werden.

Weiterhin ergänzend oder alternativ kann als Betriebszustand auch der Programmfortschritt und/oder eine Restzeit des Betriebsprozesses bestimmt werden, welche noch für den Abschluss des Betriebsprozesses benötigt wird. All diese Parameter ermöglichen eine benutzerfreundliche und informationsreiche Fernüberwachung des Betriebsprozesses des Haushaltsgeräts.

Um das Nachrüstmodul an dem Gerätegehäuse des Haushaltsgeräts zuverlässig befestigen zu können, kann die Befestigungseinrichtung einen Magneten, beispielsweise einen Permanentmagneten, und/oder einen Saugnapf bzw. Saugfuß zum lösbaren Befestigen des Nachrüstmoduls an dem Haushaltsgerät aufweisen. Insgesamt kann das Nachrüstmodul also zerstörungsfrei lösbar und reversibel lösbar an dem Gerätegehäuse des Haushaltgeräts befestigt werden.

Bevorzugt dient das System zum Überwachen des aktuellen Betriebszustands eines Haushaltsgeräts zur Pflege von Wäschestücken und/oder einer Geschirrspülmaschine. Gerade diese Haushaltsgeräte beinhalten üblicherweise einen Antriebsmotor, welcher magnetisches Drehfeld im Betrieb des Haushaltsgeräts erzeugt.

Die Erfindung betrifft außerdem ein Nachrüstmodul für ein erfindungsgemäßes System, mit einer Befestigungseinrichtung, welche zum lösbaren Befestigen des Nachrüstmoduls an einer Außenseite eines Gerätegehäuses eines Haushaltsgeräts ausgebildet ist, mit einer Sensoreinrichtung, welche zum Erfassen zumindest eines durch das Gerätegehäuse nach außen durchdringenden Emissionssignals einer den Betriebsprozess des Haushaltsgeräts durchführenden Komponente des Haushaltsgeräts ausgebildet ist, und mit einer Datenaustauscheinheit zur drahtlosen Kommunikation mit einem von dem Nachrüstmodul und dem Haushaltgerät separaten, externen Gerät. Dieses externe Gerät kann das oben genannte Kommunikationsgerät und/oder der ebenfalls genannte Internet-Server sein. Die Sensoreinrichtung umfasst einen Magnetfeldsensor, der zum Erfassen eines durch einen Antriebsmotor als Komponente des Haushaltsgeräts erzeugten Magnetfelds als Emissionssignal ausgebildet ist. Das Nachrüstmodul kann die erfassten Messwerte des Magnetfelds über die Datenaustauscheinheit an das externe Gerät zum Bestimmen des aktuellen Betriebszustands des Haushaltsgeräts übertragen und/oder selbst anhand der Messwerte den Betriebszustand des Haushaltsgeräts bestimmen und an das externe Gerät übertragen.

Ein erfindungsgemäßes Verfahren dient zum Überwachen eines aktuellen Betriebszustands eines programmgesteuerten Haushaltsgeräts beim Durchführen eines Betriebsprozesses durch das Haushaltsgerät, wobei ein Nachrüstmodul mit einer Sensoreinrichtung, einer Datenaustauscheinheit und einer Befestigungseinrichtung bereitgestellt und über die Befestigungseinrichtung an einer Außenseite eines Gerätegehäuses des Haushaltsgeräts befestigt wird, wobei mittels der Sensoreinrichtung des Nachrüstmoduls zumindest ein Emissionssignal des Haushaltsgeräts erfasst wird, und wobei über die Datenaustauscheinheit das Nachrüstmodul mit einem von dem Nachrüstmodul und dem Haushaltsgerät separaten Kommunikationsgerät drahtlos kommuniziert. Mittels eines Magnetsensors der Sensoreinrichtung wird ein Magnetfeld eines Antriebsmotors des Haushaltsgeräts erfasst, und anhand von erfassten Messwerten des Magnetfelds wird der aktuelle Betriebszustand des Haushaltsgeräts bestimmt und über das Kommunikationsgerät ausgegeben. Diese Bestimmung kann in dem Nachrüstmodul und/oder dem Kommunikationsgerät und/oder einem Internet-Server erfolgen.

Die mit Bezug auf das erfindungsgemäße System vorgestellten bevorzugten Ausführungsformen und deren Vorteile gelten entsprechend für das erfindungsgemäße Nachrüstsystem sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels wie auch unter Bezugnahme auf die beigefügten Zeichnungen näher erläutert.

Es zeigen:
- Fig. 1: in schematischer Darstellung ein System gemäß einer Ausführungsform der Erfindung; und
- Fig. 2: in schematischer Darstellung ein Blockschaltbild eines Nachrüstmoduls gemäß einer Ausführungsform der Erfindung.

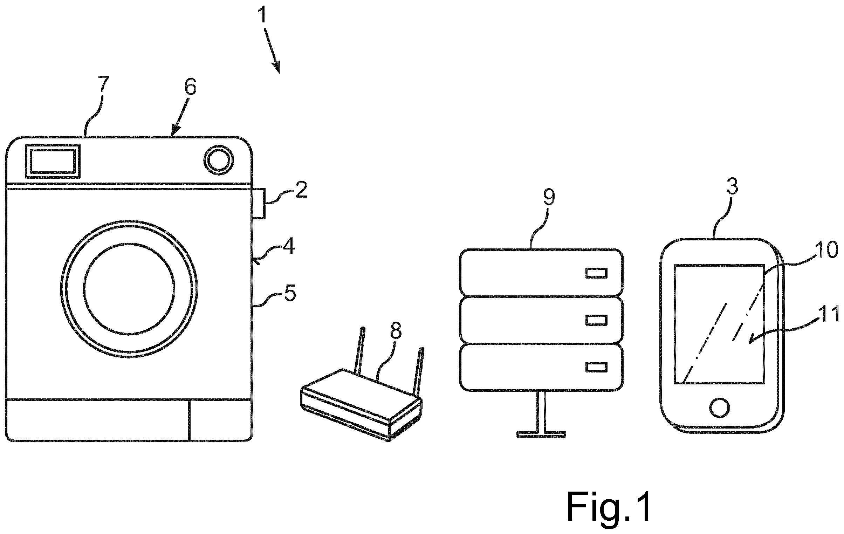

Ein in Fig. 1 dargestelltes System 1 beinhaltet ein Nachrüstmodul 2 sowie ein Kommunikationsgerät 3, welches im Ausführungsbeispiel als Smartphone ausgebildet ist. Das Nachrüstmodul 2 kann an einer Außenseite 4 einer Außenwand 5 eines Gerätegehäuses 6 eines insgesamt mit 7 bezeichneten Haushaltsgeräts reversibel lösbar befestigt werden. Das Haushaltsgerät 7 ist im Ausführungsbeispiel eine Waschmaschine. Das Nachrüstmodul 2 kommuniziert über einen WLAN-Router 8 mit einem Internet-Server 9 und über den Internet-Server 9 mit dem Kommunikationsgerät 3. Das Kommunikationsgerät 3 weist als Ausgabemittel ein Display 10 auf, welches als Touchscreen ausgebildet ist und eine berührungssensitive Oberfläche 11 aufweist, über welche Bedieneingaben an dem Kommunikationsgerät 3 vorgenommen werden können. Über das Display 10 können Betriebszustände des Haushaltsgeräts 7 ausgegeben werden, welche anhand von Messwerten bestimmt werden, die durch Sensoren des Nachrüstmoduls 2 erfasst werden.

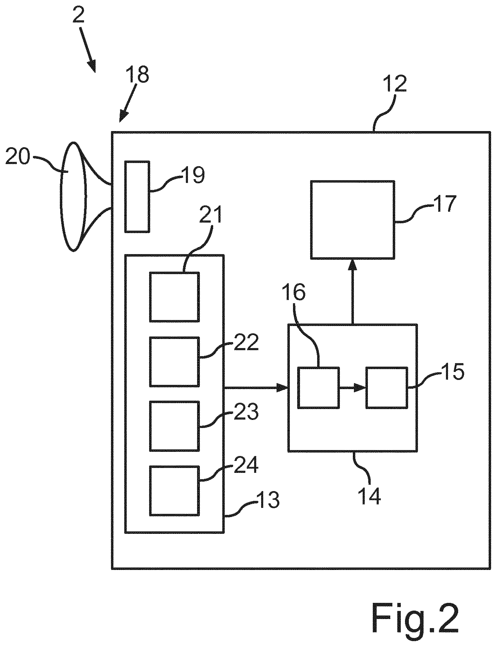

In Fig. 2 ist ein Blockdiagramm des Nachrüstmoduls 2 gemäß einer Ausführungsform der Erfindung dargestellt. In einem geschlossenen Gehäuse 12 des Nachrüstmoduls 2 befindet sich eine Sensoreinrichtung 13, welche zum Erfassen von Emissionssignalen dient, die aus dem Haushaltsgerät 7 durch das Gerätegehäuse 6 ausgegeben werden. Die Sensoreinrichtung 13 ist mit einer Recheneinrichtung 14 elektrisch gekoppelt, welche eine Auswerteeinrichtung 15 und optional eine Plausibilisierungseinrichtung 16 beinhalten kann. Die Recheneinrichtung 14 kann in Form eines gemeinsamen digitalen Signalprozessors bereitgestellt sein, sodass die Plausibilisierungseinrichtung 16 und die Auswerteeinrichtung 15 quasi durch denselben Signalprozessor gebildet sind. Die Recheneinrichtung 14 ist mit einer Datenaustauscheinheit 17 gekoppelt, welche zur Kommunikation mit dem Internet-Server 9 ausgebildet ist. Die Datenaustauscheinheit 17 kann ergänzend oder alternativ auch zur direkten Kommunikation mit dem Kommunikationsgerät 3 dienen, beispielsweise über das WLAN-Netzwerk.

Das Nachrüstmodul 2 weist außerdem eine Befestigungseinrichtung 18 auf, welche zur lösbaren Befestigung des Nachrüstmoduls 2 an dem Gerätegehäuse dient. Die Befestigungseinrichtung 18 kann einen Magneten 19 und/oder einen Saugnapf 20 umfassen, um das Nachrüstmodul 2 an dem Gerätegehäuse 6 befestigen zu können.

Die Sensoreinrichtung 13 umfasst einen Magnetfeldsensor 21. Optional umfasst die Sensoreinrichtung 13 auch einen Beschleunigungssensor 22. Weiterhin optional kann die Sensoreinrichtung 13 auch einen Schallsensor 23 und/oder einen Temperatursensor 24 umfassen. Die Messwerte aller Sensoren 21, 22, 23, 24 werden an die Recheneinrichtung 14 zur Verarbeitung übermittelt.

Es kann vorgesehen sein, dass die Recheneinrichtung 14 den aktuellen Betriebszustand des Haushaltsgeräts 7 anhand der Messwerte ermitteln kann. Ergänzend oder alternativ kann auch vorgesehen sein, dass ein Betriebszustand des Haushaltsgeräts 7 durch den Internet-Server 9 und/oder das Kommunikationsgerät 3 bestimmt wird. Unabhängig davon, an welchem Ort bzw. in welchem Gerät der Betriebszustand des Haushaltsgeräts 7 ermittelt wird, wird dieser Betriebszustand dann durch das Kommunikationsgerät 3 ausgegeben, nämlich insbesondere über das Display 10. Dazu kann auf dem Kommunikationsgerät 3 eine entsprechende Applikation installiert sein.

Erfolgt die Bestimmung des Betriebszustands in dem Nachrüstmodul 2 selbst, so übernimmt diese Aufgabe die Auswerteeinrichtung 15. Die Plausibilisierungseinrichtung 16 hat die Aufgabe, anhand eines Vergleichs des Magnetfelds mit zumindest einem weiteren Emissionssignal festzustellen, ob diese Emissionssignale von dem Haushaltsgerät 7 selbst oder aber von anderen Störquellen stammen. Diese Emissionssignale werden nur dann an die Auswerteeinrichtung 15 weitergeleitet, wenn detektiert wird, dass die Signale von dem Haushaltsgerät 7 kommen. Dies kann beispielsweise so aussehen, dass durch die Plausibilisierungseinrichtung 16 überprüft wird, ob sowohl anhand des Magnetfelds als auch anhand des anderen Emissionssignals eine Drehung der Wäschetrommel detektiert werden kann.

Insgesamt empfängt die Auswerteeinrichtung 15 also folgende Emissionssignale: das Magnetfeld von dem Magnetfeldsensor 21, die Beschleunigung von dem Beschleunigungssensor 22, das Schallsignal von dem Schallsensor 23 sowie die Temperatur von dem Temperatursensor 24. Aus diesen Größen kann die Auswerteeinrichtung 15 folgende Betriebszustände des Haushaltsgeräts 7 bestimmen:
- einen Betriebsfehler des Haushaltsgeräts 7 und/oder
- ein aktuell ausgewähltes Betriebsprogramm des Haushaltsgeräts 7 und/oder
- einen Programmfortschritt und/oder eine Restzeit des Betriebsprozesses, hier eines Waschprozesses.

Die Detektion des Betriebsfehlers des Haushaltsgeräts 7 erfolgt durch Vergleichen der Messwerte zumindest eines der Sensoren 21 bis 24 mit abgelegten Referenzwerten. Werden Abweichungen festgestellt, so wird auf einen Betriebsfehler zurückgeschlossen.

Die Erfassung des Abschlusses des Betriebsprozesses bzw. des Programmendes kann beispielsweise so aussehen, dass durch die Auswerteeinrichtung 15 überprüft wird, ob über eine vorbestimmte Zeitdauer kein Magnetfeld durch den Magnetfeldsensor 21 und/oder keine Beschleunigung durch den Beschleunigungssensor 22 und/oder kein Schall durch den Schallsensor 23 detektiert wird. Wird kein Signal über diese vorbestimmte Zeitdauer detektiert, kann angenommen werden, dass der Betriebsprozess bereits beendet wurde.

Die Ermittlung des Programmfortschritts und/oder der Restzeit und/oder des ausgewählten Betriebsprogramms kann so aussehen, dass die erfassten Messwerte bzw. die zeitlichen Verläufe dieser Messwerte mit abgelegten Referenzwerten bzw. Referenzverläufen verglichen werden. Solche Referenzverläufe können beispielsweise für jedes Betriebsprogramm des Haushaltsgeräts 7 vorab in dem Nachrüstmodul 2 abgelegt werden.

Der ermittelte Betriebszustand des Haushaltsgeräts 7 wird dann an das Kommunikationsgerät 2 übertragen und dort über das Display 10 ausgegeben.

Der Anbringungsort der Nachrüstmoduls hängt von dem Verbau des jeweiligen Haushaltsgeräts 7 an seinem Standort ab. Der Anbringungsort sollte so gewählt sein, dass die zu messenden Emissionssignale durch die Sensoreinrichtung 13 erfasst werden können und andererseits auch die drahtlose Signalübertragung durch die Datenaustauscheinheit 17 nicht von dem Gehäuse 6 des Haushaltsgeräts 7 abgeschirmt wird.

Die Datenaustauscheinheit 17 kann nach zumindest einem der folgenden Kommunikationsstandards kommunizieren: dem WLAN-Kommunikationsstandard und/oder dem Bluetooth-Kommunikationsstandard und/oder dem NFC-Kommunikationsstandard (Near Field Communication). Somit ist einerseits eine direkte Kommunikation mit dem Kommunikationsgerät 3 sowie andererseits eine Kommunikation mit dem Internet-Server 9 möglich.

Das Nachrüstmodul 2 kann eine eigene Energiequelle für elektrische Energie, wie beispielsweise eine Batterie, einen Akkumulator oder dergleichen, und/oder einen Stromanschluss aufweisen, über welchen das Nachrüstmodul 2 an eine herkömmliche Steckdose angeschlossen werden kann.

Wird das Nachrüstmodul 2 beispielsweise an einem Wäschetrockner oder einer Waschmaschine oder einem Waschtrockner angebracht, so kann die Auswerteeinrichtung 15 anhand der Emissionssignale die Bewegung der Wäschetrommel detektieren. Treten während der Laufzeit des Betriebsprozesses unvorhergesehene Signale auf, die zum Beispiel auf falsche Beladung oder defekte Maschinenkomponenten hindeuten, kann der Nutzer darüber auf seinem mobilen Kommunikationsgerät 3 informiert werden. Des Weiteren kann der Nutzer auch über den Programmfortschritt bzw. die Restzeit informiert werden. Nach Ende des Trocknungsprozesses oder Waschprozesses detektiert das Nachrüstmodul 2 auch den Stillstand der Wäschetrommel und/oder die von dem Haushaltsgerät 7 ausgegebenen Tonsignale und informiert den Benutzer über das Kommunikationsgerät 3 darüber. In diesem Anwendungsbeispiel ist eine geeignete Anbringungsstelle des Nachrüstmoduls die Oberseite oder die Seitenwände des Haushaltsgeräts 7.

Wird das Nachrüstmodul 2 beispielsweise an einer Geschirrspülmaschine befestigt, kann das Modul 2 die Bewegung des Sprüharms und/oder der Pumpe während der Nutzung detektieren. Hier kann die Auswerteeinrichtung 15 beispielsweise Vibrationen der Pumpe und/oder akustische Signale und/oder das Magnetfeld eines Motors erfassen. Außerdem können über den Schallsensor 23, welcher einen akustischen Sensor darstellt, Geräusche detektiert werden, die auf eine Fehlfunktion hinweisen. Diese Fehler können über das Kommunikationsgerät 3 gemeldet werden. Es kann sich bei einem Fehler beispielsweise um eine fehlerhafte Positionierung von Geschirrteilen handeln, was damit verbunden ist, dass der Sprüharm gegen die Geschirrteile schlägt. Ebenso wie bei der Waschmaschine ist auch hier eine Information über den Programmfortschritt mithilfe geeigneter logischer Informationsverarbeitung möglich. Hierüber kann der Benutzer auf seinem Kommunikationsgerät 3 informiert werden. Nach Ende des Spülvorgangs detektiert das Nachrüstmodul 2 den Stillstand des Sprüharms bzw. der Pumpe und/oder die von dem Haushaltsgerät 7 ausgegebenen Tonsignale und informiert den Benutzer mittels des Kommunikationsgeräts 3.

### Bezugszeichenliste

- 1: System
- 2: Nachrüstmodul
- 3: Kommunikationsgerät
- 4: Außenseite
- 5: Außenwand
- 6: Gerätegehäuse
- 7: Haushaltsgerät
- 8: WLAN-Router
- 9: Internet-Server
- 10: Display
- 11: Oberfläche
- 12: Gehäuse
- 13: Sensoreinrichtung
- 14: Recheneinrichtung
- 15: Auswerteeinrichtung
- 16: Plausibilisierungseinrichtung
- 17: Datenaustauscheinheit
- 18: Befestigungseinrichtung
- 19: Magnet
- 20: Saugnapf
- 21: Magnetfeldsensor
- 22: Beschleunigungssensor
- 23: Schallsensor
- 24: Temperatursensor

## Patentansprüche

1. Nachrüstmodul (2) für ein Haushaltsgerät, mit einer Befestigungseinrichtung (18), welche zum lösbaren Befestigen des Nachrüstmoduls (2) an einer Außenseite (4) eines Gerätegehäuses (6) eines Haushaltsgeräts (7) ausgebildet ist, mit einer Datenaustauscheinheit (17) zur drahtlosen Kommunikation mit einem von dem Nachrüstmodul (2) und dem Haushaltsgerät (7) separaten, externen Gerät (3, 9) und mit einer Sensoreinrichtung (13), welche zum Erfassen zumindest eines durch das Gerätegehäuse (6) nach außen durchdringenden Emissionssignals einer den Betriebsprozess des Haushaltsgeräts (7) durchführenden Komponente des Haushaltsgeräts (7) ausgebildet ist, **dadurch gekennzeichnet, dass** die Sensoreinrichtung (13) einen Magnetfeldsensor (21) umfasst, der zum Erfassen eines durch einen Antriebsmotor als Komponente des Haushaltsgeräts (7) erzeugten Magnetfelds als Emissionssignal ausgebildet ist.

2. Nachrüstmodul (2) nach Anspruch 1, welches dazu ausgelegt ist,
- erfasste Messwerte des Magnetfelds über die Datenaustauscheinheit (17) an das externe Gerät (3, 9) zum Bestimmen des aktuellen Betriebszustands des Haushaltsgeräts (7) zu übertragen und/oder
- anhand der Messwerte des Magnetfelds den Betriebszustand des Haushaltsgeräts (7) zu bestimmen und an das externe Gerät (3, 9) zu übertragen.

3. System (1) zum Überwachen eines aktuellen Betriebszustands eines programmgesteuerten Haushaltsgeräts (7) beim Durchführen eines Betriebsprozesses durch das Haushaltsgerät (7), umfassend ein Nachrüstmodul (2) nach Anspruch 1 oder 2 und ein von dem Nachrüstmodul (2) und dem Haushaltsgerät (7) separates Kommunikationsgerät (3), wobei das System (1) dazu ausgelegt ist, anhand von erfassten Messwerten des Emissionssignals den aktuellen Betriebszustand des Haushaltsgeräts (7) zu bestimmen und über das Kommunikationsgerät (3) auszugeben.

4. System (1) nach Anspruch 3, **dadurch gekennzeichnet, dass** zusätzlich zu dem Magnetfeldsensor (21) die Sensoreinrichtung (13) des Nachrüstmoduls (2) zumindest einen weiteren Sensor (22, 23, 24) umfasst, der zum Erfassen eines von dem Magnetfeld verschiedenen Emissionssignals einer den Betriebsprozess des Haushaltsgeräts (7) durchführenden Komponente des Haushaltsgeräts (7) ausgebildet ist, wobei das System (1) dazu ausgelegt ist, den Betriebszustand des Haushaltsgeräts (7) auch unter Berücksichtigung von durch den zumindest einen weiteren Sensor (22, 23, 24) erfassten Messwerten zu bestimmen.

5. System (1) nach Anspruch 4, **dadurch gekennzeichnet, dass** zusätzlich zu dem Magnetfeldsensor (21) die Sensoreinrichtung (13) einen Beschleunigungssensor (22) zum Erfassen einer Beschleunigung als Emissionssignal umfasst, wobei das System (1) dazu ausgelegt ist, den Betriebszustand des Haushaltsgeräts (7) auch unter Berücksichtigung der Beschleunigung zu bestimmen.

6. System (1) nach Anspruch 4 oder 5, **dadurch gekennzeichnet, dass** zusätzlich zu dem Magnetfeldsensor (21) die Sensoreinrichtung (13) einen Schallsensor (23) zum Erfassen eines Körperschalls und/oder eines Luftschalls als Emissionssignal umfasst, wobei das System (1) dazu ausgelegt ist, den Betriebszustand des Haushaltsgeräts (7) auch unter Berücksichtigung des Körperschalls und/oder des Luftschalls zu bestimmen.

7. System (1) nach einem der Ansprüche 4 bis 6, **dadurch gekennzeichnet, dass** zusätzlich zu dem Magnetfeldsensor (21) die Sensoreinrichtung (13) einen Temperatursensor (24) zum Erfassen einer Temperatur als Emissionssignal aufweist, welcher die Außenseite (4) des Gerätegehäuses (6) ausgesetzt ist, wobei das System (1) dazu ausgelegt ist, den Betriebszustand des Haushaltsgeräts (7) auch unter Berücksichtigung der Temperatur zu bestimmen.

8. System (1) nach einem der vorhergehenden Ansprüche, **dadurch gekennzeichnet, dass** das Nachrüstmodul (2) dazu ausgelegt ist,
- die Messwerte des zumindest einen Emissionssignals über die Datenaustauscheinheit (17) an das Kommunikationsgerät (3) und/oder einen Internetserver (9) zu übertragen, wobei das Kommunikationsgerät (3) und/oder der Internetserver (9) dazu ausgelegt ist, anhand der empfangenen Messwerte den aktuellen Betriebszustand des Haushaltsgeräts (7) zu bestimmen, und/oder
- anhand der Messwerte des zumindest einen Emissionssignals den Betriebszustand des Haushaltsgeräts (7) zu bestimmen und den Betriebszustand des Haushaltsgeräts (7) an das Kommunikationsgerät (3) zu übertragen.

9. System (1) nach einem der vorhergehenden Ansprüche, **dadurch gekennzeichnet, dass** das System (1), insbesondere das Nachrüstmodul (2), eine Plausibilisierungseinrichtung (16) umfasst, die dazu ausgelegt ist, anhand eines Vergleichs des erfassten Magnetfelds und zumindest eines von dem Magnetfeld verschiedenen Emissionssignals zu überprüfen, ob diese Emissionssignale von dem Haushaltsgerät (7) stammen, und die Emissionssignale ausschließlich nach einer Zuordnung zu dem Haushaltsgerät (7) der Bestimmung des aktuellen Betriebszustands zugrunde zu legen.

10. System (1) nach einem der vorhergehenden Ansprüche, **dadurch gekennzeichnet, dass** das Kommunikationsgerät (3) ein tragbares Endgerät ist.

11. System (1) nach einem der vorhergehenden Ansprüche, **dadurch gekennzeichnet, dass** das System (1) dazu ausgelegt ist, den aktuellen Betriebszustand des Haushaltsgeräts (7) anhand eines Vergleichs der Messwerte des Magnetfelds und/oder zumindest eines von dem Magnetfeld verschiedenen Emissionssignals mit abgelegten Referenzwerten zu bestimmen.

12. System (1) nach einem der vorhergehenden Ansprüche, **dadurch gekennzeichnet, dass** das System (1) dazu ausgelegt ist, anhand eines Vergleichs der Messwerte des Magnetfelds und/oder zumindest eines von dem Magnetfeld verschiedenen Emissionssignals mit abgelegten Referenzwerten einen Betriebsfehler des Haushaltsgeräts (7) als Betriebszustand zu detektieren und über das Kommunikationsgerät (3) zu signalisieren.

13. System (1) nach einem der vorhergehenden Ansprüche, **dadurch gekennzeichnet, dass** das System (1) dazu ausgelegt ist, anhand der Messwerte des Magnetfelds und/oder zumindest eines von dem Magnetfeld verschiedenen Emissionssignals:
- ein aktuell ausgewähltes Betriebsprogramm des Haushaltsgeräts (7) als Betriebszustand zu ermitteln und/oder
- einen Abschluss des Betriebsprozesses als Betriebszustand zu detektieren und/oder
- einen Programmfortschritt und/oder eine Restzeit des Betriebsprozesses als Betriebszustand zu bestimmen.

14. System (1) nach einem der vorhergehenden Ansprüche, **dadurch gekennzeichnet, dass** die Befestigungseinrichtung (18) einen Magneten (19), insbesondere einen Permanentmagneten, und/oder einen Saugnapf (20) zum lösbaren Befestigen des Nachrüstmoduls (2) an dem Haushaltsgerät (7) aufweist.

15. System (1) nach einem der vorhergehenden Ansprüche, **dadurch gekennzeichnet, dass** das System (1) zum Überwachen des aktuellen Betriebszustands eines Haushaltsgeräts (7) zur Pflege von Wäschestücken und/oder einer Geschirrspülmaschine ausgebildet ist.

16. Verfahren zum Überwachen eines aktuellen Betriebszustands eines programmgesteuerten Haushaltsgeräts (7) beim Durchführen eines Betriebsprozesses durch das Haushaltsgerät (7), wobei ein Nachrüstmodul (2) mit einer Sensoreinrichtung (13), einer Datenaustauscheinheit (17) und einer Befestigungseinrichtung (18) bereitgestellt und über die Befestigungseinrichtung (18) an einer Außenseite (4) eines Gerätegehäuses (6) des Haushaltsgeräts (7) befestigt wird, wobei mittels der Sensoreinrichtung (13) des Nachrüstmoduls (2) zumindest ein durch das Gerätegehäuse (6) nach außen durchdringendes Emissionssignal einer den Betriebsprozess des Haushaltsgeräts (7) durchführenden Komponente des Haushaltsgeräts (7) erfasst wird, und wobei über die Datenaustauscheinheit (17) das Nachrüstmodul (2) mit einem von dem Nachrüstmodul (2) und dem Haushaltsgerät (7) separaten Kommunikationsgerät (3) drahtlos kommuniziert, **dadurch gekennzeichnet, dass** mittels eines Magnetsensors der Sensoreinrichtung (13) ein durch einen Antriebsmotor als Komponente des Haushaltsgeräts (7) erzeugtes Magnetfeld als Emissionssignal erfasst wird und anhand von erfassten Messwerten des Magnetfelds der aktuelle Betriebszustand des Haushaltsgeräts (7) bestimmt und über das Kommunikationsgerät (3) ausgegeben wird.

## Claims

1. Retrofit module (2) for a domestic appliance, with a fastening arrangement (18) which is designed for releasable fastening of the retrofit module (2) on an outer face (4) of an appliance housing (6) of a domestic appliance (7), with a data exchange unit (17) for wireless communication with an external appliance (3, 9) which is separate from the retrofit module (2) and the domestic appliance (7) and with a sensor arrangement (13) which is designed to detect at least one emission signal from a component of the domestic appliance (7) carrying out the operating process of the domestic appliance (7), said signal penetrating outwards through the appliance housing (6), **characterised in that** the sensor arrangement (13) has a magnetic field sensor (21) which is designed for detecting a magnetic field, generated by a drive motor as a component of the domestic appliance (7), as an emission signal.

2. Retrofit module (2) according to claim 1, which is designed
- to transmit detected measured values of the magnetic field by means of the data exchange unit (17) to the external appliance (3, 9) to determine the current operational state of the domestic appliance (7) and/or
- with the aid of the measured values of the magnetic field to determine the operational state of the domestic appliance (7) and transmit this to the external appliance (3, 9).

3. System (1) for monitoring a current operational state of a program-controlled domestic appliance (7) while the domestic appliance (7) carries out an operating process, which system comprises a retrofit module (2) according to claim 1 or 2 and a communication device (3) which is separate from the retrofit module (2) and the domestic appliance (7), wherein the system (1) is designed to determine the current operational state of the domestic appliance (7) with the aid of detected measured values of the emission signal and to output said state by means of the communication device (3).

4. System (1) according to claim 3, **characterised in that** in addition to the magnetic field sensor (21), the sensor arrangement (13) of the retrofit module (2) has at least one further sensor (22, 23, 24) which is designed to detect an emission signal, different from the magnetic field, of a component of the domestic appliance (7) carrying out the operating process of the domestic appliance (7), wherein the system (1) is designed to determine the operational state of the domestic appliance (7) also taking into consideration measured values detected by the at least one further sensor (22, 23, 24).

5. System (1) according to claim 4, **characterised in that**, in addition to the magnetic field sensor (21), the sensor arrangement (13) has an acceleration sensor (22) for detecting acceleration as an emission signal, wherein the system (1) is designed to determine the operational state of the domestic appliance (7) while also taking into consideration the acceleration.

6. System (1) according to claim 4 or 5, **characterised in that**, in addition to the magnetic field sensor (21), the sensor arrangement (13) has an acoustic sensor (23) for the detection of a structure-borne sound and/or an airborne sound as an emission signal, wherein the system (1) is designed to determine the operational state of the domestic appliance (7) while also taking into consideration the structure-borne sound and/or the airborne sound.

7. System (1) according to one of the claims 4 to 6, **characterised in that**, in addition to the magnetic field sensor (21), the sensor arrangement (13) has a temperature sensor (24) for detecting a temperature, to which the outer face (4) of the appliance housing (6) is exposed, as an emission signal, wherein the system (1) is designed to determine the operational state of the domestic appliance (7) while also taking into consideration the temperature.

8. System (1) according to one of the preceding claims, **characterised in that** the retrofit module (2) is designed to
- transmit the measured values of the at least one emission signal by means of the data exchange unit (17) to the communication device (3) and/or to an internet server (9), wherein the communication device (3) and/or the internet server (9) is designed to determine the current operational state of the domestic appliance (7) with the aid of the received measured values, and/or
- determine the operational state of the domestic appliance (7) with the aid of the measured values of the at least one emission signal and to transmit the operational state of the domestic appliance (7) to the communication device (3).

9. System (1) according to one of the preceding claims, **characterised in that** the system (1), in particular the retrofit module (2), has a plausibilisation device (16) which is designed to check whether these emission signals originate from the domestic appliance (7) on the basis of a comparison of the detected magnetic field and at least one emission signal different from the magnetic field, and to take the emission signals as the basis for determining the current operational state only after assignment to the domestic appliance (7).

10. System (1) according to one of the preceding claims, **characterised in that** the communication device (3) is a portable terminal.

11. System (1) according to one of the preceding claims, **characterised in that** the system (1) is designed to determine the current operational state of the domestic appliance (7) on the basis of a comparison of the measured values of the magnetic field and/or at least one emission signal different from the magnetic field with stored reference values.

12. System (1) according to one of the preceding claims, **characterised in that** the system (1) is designed, on the basis of a comparison of the measured values of the magnetic field and/or at least one emission signal different from the magnetic field with stored reference values, to detect an operational error of the domestic appliance (7) as the operational state and to signal this by way of the communication device (3).

13. System (1) according to one of the preceding claims, **characterised in that** the system (1) is designed, on the basis of the measured values of the magnetic field and/or at least one emission signal different from the magnetic field:
- to detect a currently selected operating program of the domestic appliance (7) as an operational state and/or
- to detect completion of the operating process as an operational state and/or
- to determine the progress of a program and/or the remaining time of the operating process as an operational state.

14. System (1) according to one of the preceding claims, **characterised in that** the fastening arrangement (18) has a magnet (19), in particular a permanent magnet and/or a suction cup (20) for releasable fastening of the retrofit module (2) on the domestic appliance (7).

15. System (1) according to one of the preceding claims, **characterised in that** the system (1) is designed to monitor the current operational state of a domestic appliance (7) for laundry care and/or a dishwasher.

16. Method for monitoring a current operational state of a program-controlled domestic appliance (7) while the domestic appliance (7) carries out an operating process, wherein a retrofit module (2) with a sensor arrangement (13), a data exchange unit (17) and a fastening arrangement (18) is provided and by means of the fastening arrangement (18) is fastened on an outer face (4) of an appliance housing (6) of the domestic appliance (7), wherein by means of the sensor arrangement (13) of the retrofit module (2) at least at least one emission signal from a component of the domestic appliance (7) carrying out the operating process of the domestic appliance (7) is detected, said signal penetrating outwards through the appliance housing (6), and wherein by means of the data exchange unit (17) the retrofit module (2) communicates wirelessly with a communication device (3) separate from the retrofit module (2) and the domestic appliance (7), **characterised in that** a magnetic field generated by a drive motor as a component of the domestic appliance (7) is detected as an emission signal by means of a magnetic sensor of the sensor arrangement (13) and with the aid of detected measured values of the magnetic field the current operational state of the domestic appliance (7) is determined and output by means of the communication device (3).

## Revendications

1. Module d'équipement ultérieur (2) pour un appareil ménager, comprenant un dispositif de fixation (18) qui est réalisé pour la fixation amovible du module d'équipement ultérieur (2) sur un côté extérieur (4) d'un boîtier d'appareil (6) d'un appareil ménager (7), comprenant une unité d'échange de données (17) pour la communication sans fil avec un appareil externe (3, 9), séparé du module d'équipement ultérieur (2) et de l'appareil ménager (7), et comprenant un dispositif capteur (13) qui est réalisé pour détecter au moins un signal d'émission, traversant le boîtier d'appareil (6) vers l'extérieur, d'un composant de l'appareil ménager (7) réalisant le processus de fonctionnement de l'appareil ménager (7), **caractérisé en ce que** le dispositif capteur (13) comprend un capteur de champ magnétique (21) qui est réalisé pour détecter un champ magnétique, en tant que signal d'émission, généré par un moteur d'entraînement en tant que composant de l'appareil ménager (7).

2. Module d'équipement ultérieur (2) selon la revendication 1, lequel est conçu
- pour transmettre à l'appareil externe (3, 9), par l'intermédiaire de l'unité d'échange de données (17), des valeurs de mesure détectées du champ magnétique, destinées à déterminer l'état de fonctionnement en cours de l'appareil ménager (7) et/ou
- pour déterminer l'état de fonctionnement de l'appareil ménager (7) à l'aide des valeurs de mesure du champ magnétique et pour les transmettre à l'appareil externe (3, 9).

3. Système (1) de surveillance d'un état de fonctionnement en cours d'un appareil ménager (7) commandé par programme lors de la réalisation d'un processus de fonctionnement par l'appareil ménager (7), comprenant un module d'équipement ultérieur (2) selon la revendication 1 ou 2 et un appareil de communication (3) séparé du module d'équipement ultérieur (2) et de l'appareil ménager (7), le système (1) étant conçu pour déterminer l'état de fonctionnement en cours de l'appareil ménager (7) à l'aide de valeurs de mesure détectées du signal d'émission et pour l'émettre par l'intermédiaire de l'appareil de communication (3).

4. Système (1) selon la revendication 3, **caractérisé en ce qu'**en plus du capteur de champ magnétique (21), le dispositif capteur (13) du module d'équipement ultérieur (2) comprend au moins un capteur supplémentaire (22, 23, 24) qui est réalisé pour détecter un signal d'émission, différent du champ magnétique, d'un composant de l'appareil ménager (7) réalisant un processus de fonctionnement de l'appareil ménager (7), le système (1) étant conçu pour déterminer l'état de fonctionnement de l'appareil ménager (7) en tenant également compte de valeurs de mesure détectées par l'au moins un capteur supplémentaire (22, 23, 24).

5. Système (1) selon la revendication 4, **caractérisé en ce qu'**en plus du capteur de champ magnétique (21), le dispositif capteur (13) comprend un capteur d'accélération (22) destiné à détecter une accélération en tant que signal d'émission, le système (1) étant conçu pour déterminer l'état de fonctionnement de l'appareil ménager (7) en tenant également compte de l'accélération.

6. Système (1) selon la revendication 4 ou 5, **caractérisé en ce qu'**en plus du capteur de champ magnétique (21), le dispositif capteur (13) comprend un capteur de son (23) destiné à détecter un bruit de structure et/ou un son aérien en tant que signal d'émission, le système (1) étant conçu pour déterminer l'état de fonctionnement de l'appareil ménager (7) en tenant également compte du bruit de structure et/ou du son aérien.

7. Système (1) selon l'une quelconque des revendications 4 à 6, **caractérisé en ce qu'**en plus du capteur de champ magnétique (21), le dispositif capteur (13) comprend un capteur de température (24) destiné à détecter, en tant que signal d'émission, une température à laquelle le côté extérieur (4) du boîtier d'appareil (6) est exposé, le système (1) étant conçu pour déterminer l'état de fonctionnement de l'appareil ménager (7) en tenant également compte de la température.

8. Système (1) selon l'une quelconque des revendications précédentes, **caractérisé en ce que** le module d'équipement ultérieur (2) est conçu
- pour transmettre les valeurs de mesure de l'au moins un signal d'émission à l'appareil de communication (3) par l'intermédiaire de l'unité d'échange de données (17) et/ou pour les transmettre à un serveur Internet (9), l'appareil de communication (3) et/ou le serveur Internet (9) étant conçus pour déterminer l'état de fonctionnement en cours de l'appareil ménager (7) à l'aide des valeurs de mesure reçues, et/ou
- pour déterminer l'état de fonctionnement de l'appareil ménager (7) à l'aide des valeurs de mesure de l'au moins un signal d'émission et pour transmettre l'état de fonctionnement de l'appareil ménager (7) à l'appareil de communication (3).

9. Système (1) selon l'une quelconque des revendications précédentes, **caractérisé en ce que** le système (1), notamment le module d'équipement ultérieur (2), comprend un dispositif de plausibilité (16) qui est conçu pour vérifier, à l'aide d'une comparaison du champ magnétique détecté et d'au moins un signal d'émission différent du champ magnétique, si ces signaux d'émission proviennent de l'appareil ménager (7) et pour prendre les signaux d'émission comme base de la détermination de l'état de fonctionnement en cours, uniquement après une attribution à l'appareil ménager (7).

10. Système (1) selon l'une quelconque des revendications précédentes, **caractérisé en ce que** l'appareil de communication (3) est un appareil terminal portable.

11. Système (1) selon l'une quelconque des revendications précédentes, **caractérisé en ce que** le système (1) est conçu pour déterminer l'état de fonctionnement en cours de l'appareil ménager (7) à l'aide d'une comparaison des valeurs de mesure du champ magnétique et/ou d'au moins un signal d'émission différent du champ magnétique avec des valeurs de référence mémorisées.

12. Système (1) selon l'une quelconque des revendications précédentes, **caractérisé en ce que** le système (1) est conçu pour détecter, en tant qu'état de fonctionnement, une erreur de fonctionnement de l'appareil ménager (7) à l'aide d'une comparaison des valeurs de mesure du champ magnétique et/ou d'au moins un signal d'émission différent du champ magnétique avec des valeurs de référence mémorisées et pour la signaler par l'intermédiaire de l'appareil de communication (3).

13. Système (1) selon l'une quelconque des revendications précédentes, **caractérisé en ce que** le système (1) est conçu, à l'aide des valeurs de mesure du champ magnétique et/ou d'au moins un signal d'émission différent du champ magnétique,
- pour déterminer, en tant qu'état de fonctionnement, un programme de fonctionnement sélectionné, en cours, de l'appareil ménager (7), et/ou
- pour détecter, en tant qu'état de fonctionnement, un achèvement du processus de fonctionnement, et/ou
- pour déterminer, en tant qu'état de fonctionnement, une progression du programme et/ou un temps résiduel du processus de fonctionnement.

14. Système (1) selon l'une quelconque des revendications précédentes, **caractérisé en ce que** le dispositif de fixation (18) présente un aimant (19), notamment un aimant permanent, et/ou une ventouse (20) pour la fixation amovible du module d'équipement ultérieur (2) sur l'appareil ménager (7).

15. Système (1) selon l'une quelconque des revendications précédentes, **caractérisé en ce que** le système (1) est réalisé pour surveiller l'état de fonctionnement en cours d'un appareil ménager (7) destiné à l'entretien de linge et/ou d'un lave-vaisselle.

16. Procédé de surveillance d'un état de fonctionnement en cours d'un appareil ménager (7) commandé par programme lors de la réalisation d'un processus de fonctionnement par l'appareil ménager (7), un module d'équipement ultérieur (2), comprenant un dispositif capteur (13), une unité d'échange de données (17) et un dispositif de fixation (18), étant fourni et fixé sur un côté extérieur (4) d'un boîtier d'appareil (6) de l'appareil ménager (7) par l'intermédiaire du dispositif de fixation (18), au moins un signal d'émission, traversant le boîtier d'appareil (6) vers l'extérieur, d'un composant de l'appareil ménager (7) réalisant le processus de fonctionnement de l'appareil ménager (7) étant détecté au moyen du dispositif capteur (13) du module d'équipement ultérieur (2), et le module d'équipement ultérieur (2) communiquant sans fil avec un appareil de communication (3) séparé du module d'équipement ultérieur (2) et de l'appareil ménager (7) par l'intermédiaire de l'unité d'échange de données (17), **caractérisé en ce qu'**un champ magnétique, généré par un moteur d'entraînement en tant que composant de l'appareil ménager (7), est détecté en tant que signal d'émission au moyen d'un capteur magnétique du dispositif capteur (13), et **en ce que** l'état de fonctionnement en cours de l'appareil ménager (7) est déterminé à l'aide de valeurs de mesure détectées du champ magnétique et est émis par l'intermédiaire de l'appareil de communication (3).
